# EUROPÄISCHE PATENTSCHRIFT

(11) **EP 1 725 893 B1**
(45) Veröffentlichungstag und Bekanntmachung des Hinweises auf die Patenterteilung: **10.03.2021**
(21) Anmeldenummer: 05707791.9
(22) Anmeldetag: 18.01.2005
(51) Int. Cl.: G01V 3/15

(54) **ORTUNGSGERÄT**
LOCATING DEVICE
APPAREIL DE LOCALISATION

(30) Priorität: 09.03.2004 DE 102004011285
(43) Veröffentlichungstag der Anmeldung: 29.11.2006
(73) Patentinhaber: Robert Bosch GmbH, 70442 Stuttgart (DE)
(72) Erfinder: SKULTETY-BETZ, Uwe, 70771 Leinfelden-Echterdingen (DE); HAASE, Bjoern, 70182 Stuttgart (DE); KRAPF, Reiner, 72770 Reutlingen (DE)
(86) Internationale Anmeldenummer: PCT/EP2005/050179
(87) Internationale Veröffentlichungsnummer: WO 2005/088347

(56) Entgegenhaltungen:
- US-A- 3 662 255
- US-A- 5 659 247
- US-A1- 2001 007 420
- US-A1- 2002 135 347

## Beschreibung

Die Erfindung betrifft ein Ortungsgerät, insbesondere ein handgehaltenes Ortungsgerät zur Detektion von in einem Medium eingeschlossenen Objekten, nach dem Oberbegriff des Anspruchs 1.

### Stand der Technik

Ortungsgeräte zur Detektion von in einem Medium eingeschlossenen Objekten werden vielfach im Bereich des Handwerks und des Innenausbaus, beispielsweise zur Lokalisierung von elektrischen Leitungen oder Wasserleitungen, genutzt. Neben der Realisierung der eigentlichen Messfunktion ist die Bedienung des Gerätes von entscheidender Bedeutung für die Qualität des Messergebnisses. Ein von der Technologie her hochwertiges Messgerät kann in der Praxis im Feld nur eine geringe Messleistung erreichen, wenn der Benutzer es falsch bedient, beziehungsweise bei der Bedienung des Geräts von falschen Annahmen ausgeht. So ist beispielsweise bei fehlerhaften Annahmen des Bedieners zur exakten Sensorposition ein genaues Markieren des Ortes allein aus diesem Grund nicht möglich.

Aus der DE 42 00 518 A1 ist ein handgehaltener Metallsuchdetektor bekannt, der es dem Nutzer ermöglicht, sowohl die Position als auch die Tiefe eines in einem Medium eingeschlossenen Metallgegenstandes qualitativ zu bestimmen. Bei diesem Messgerät wird mittels eines mit zwei Spulenpaaren versehenen Sensors verborgenes Metall beispielsweise in einer Wand aufgespürt und die Einschlusstiefe ermittelt. Die beiden Spulenpaare des Sensors sind jeweils mit einem Oszillator verbunden und schwingen kontinuierlich mit unterschiedlichen Frequenzen. Die vom Metall beeinflussten Signale werden gemessen und für die Auswertung gewichtet. Eine Intensitätsanzeige in Form eines Balkendiagramms kennzeichnet die Lage des eingeschlossenen Metalls. Zur Markierung des aufgefundenen Ortes des eingeschlossenen Metalls besitzt das Ortungsgerät der DE 42 00 518 A1 im Wirkzentrum des Sensors eine Bohrung, durch die beispielsweise der Bohrer einer Bohrmaschine bzw. Markierungsmittel durchgeführt werden können. So ist beispielsweise in einer Ausführungsform des Ortungsgerätes der DE 42 00 518 A1 vorgesehen, einen Stempel mit einem Farbmittel verschiebbar in dieser Bohrung anzuordnen, um den lokalisierten Ort beispielsweise auf einer Wand kenntlich zu machen.

Aus der US 6,259,241 B1 ist ein Ortungsgerät zur Detektion von in einem Medium eingeschlossenen Objekten bekannt, welches durch Aussendung eines gerichteten Lichtsignals auf die zu untersuchende Fläche die Position des eingeschlossenen Gegenstandes hinter der Oberfläche anzeigen soll. Das Gerät der US 6,259,241 B1 besitzt eine oder eine Mehrzahl von Leuchtdioden, die ins Gehäuse eingesetzt sind und über entsprechende Öffnungen in der Gehäusewand bei Aktivierung ein Lichtsignal aussenden können, welches auf den zu untersuchenden Gegenstand gerichtet ist. Detektiert ein Sensor des Messgerätes ein entsprechendes Messsignal, so werden je nach Ausführungsform des Ortungsgerätes ein einzelner bzw. eine Mehrzahl von strichförmigen Lichtsignalen auf den zu untersuchenden Gegenstand geworfen, um auf diese Art dem Nutzer das Vorhandensein und die ungefähre Lage des eingeschlossenen Gegenstandes anzuzeigen.

Aus US5,659,247 B1 ist ein Ortungsgerät bekannt, dass zur Realisierung einer Lichtschranke auf eine Öffnung des Ortungsgeräts Licht aussendet. Ferner ist aus US3,662,255 ein Ortungsgerät bekannt, das mittels Neonbirnen eine visuelle Ausgabe einer Frequenz des Ausgangssignals eines Mischers des Ortungsgeräts realisiert. Aus US2001/007420A1 sind farbige LEDs zur Anzeige eines Betriebsmodus eines Ortungsgeräts bekannt.

### Vorteile der Erfindung

Das erfindungsgemäße Ortungsgerät zur Detektion von in einem Medium eingeschlossenen Objekten weist eine das Gerät durchdringende Öffnung auf, welche mittels mindestens einer im Messgerät vorhandenen Lichtquelle beleuchtbar ist. Ein in dieser Weise ausgestaltetes Messgerät ermöglicht in vorteilhafter Weise eine einfache Lokalisierung und Markierung eines in einem Medium eingeschlossenen Objektes. Durch die das Messgerät durchdringende Öffnung und eine entsprechende Beleuchtung dieser Öffnung wird der Nutzer des erfindungsgemäßen Ortungsgerätes auf den eigentlichen Messbereich des Messgerätes hingewiesen und über das Lichtsignal zusätzlich darüber informiert, ob im Bereich der durch die Öffnung definierten Oberfläche des zu untersuchenden Gegenstandes ein entsprechendes Messsignal lokalisiert worden ist.

Durch die in den abhängigen Ansprüchen aufgeführten Merkmale sind vorteilhafte Weiterbildungen des erfindungsgemäßen Ortungsgeräts gemäß Anspruch 1 möglich.

In vorteilhafter Weise ist die das Messgerät durchdringende Öffnung konzentrisch zu einer im Messgerät angeordneten Spule angeordnet. Auf diese Weise ist sichergestellt, dass die Markierungsmöglichkeit an der Stelle der höchsten Sensitivität des Sensors gegeben ist. Die das Messgerät durchdringende Öffnung wird dazu genutzt, beispielsweise einen Bleistift oder ähnliche Markiereinrichtungen für eine auf der Oberfläche des zu untersuchenden Mediums zu hinterlassende Markierung zu führen und genau an die richtige Position zu bringen. Eine durch die Öffnung hindurch auf die Oberfläche des zu untersuchenden Mediums aufgebrachte Markierung kennzeichnet somit die exakte Lage des in dem Medium eingeschlossenen Objektes. Dazu muss die Markierungsöffnung im Messgerät innerhalb der Spulen des induktiven Sensors des Messgerätes verlaufen. Vorteilhafterweise ist die das Messgerät durchdringende Öffnung konzentrisch zu den Spulen angeordnet, um somit den Ort der höchsten Sensitivität des Sensors möglichst exakt zu markieren.

In einer vorteilhaften Ausführungsform des erfindungsgemäßen Ortungsgerätes wird die das Messgerät durchdringende Öffnung durch eine in das Gehäuse des Messgerätes eingebrachte Hülse ausgebildet bzw. begrenzt. Mittels mindestens einer im Messgerät angeordneten Lichtquelle, die in das Hülsenmaterial hineinstrahlt, ist die Hülse und somit die das Messgerät durchdringende Öffnung beleuchtbar. Die Hülse besteht dazu im Wesentlichen aus einem transparenten bzw. halbtransparenten Kunststoff, der es ermöglicht, das in die Hülse eingekoppelte Lichtsignal weiterzuleiten, um somit die gesamte Hülse und daher die gesamte das Gerät durchdringende Öffnung zu beleuchten. In vorteilhafter Weise ist die Hülse dazu diffus lichtstreuend ausgebildet, um das an mindestens einer Stelle eingekoppelte Lichtsignal gleichmäßig über die gesamte Hülse zu verteilen.

Als Lichtquelle zur Beleuchtung der die das Messgerät durchdringenden Öffnung bildenden Hülse eignen sich in vorteilhafter Weise eine oder mehrere Leuchtdioden.

Gemäß der Erfindung sind in dem Ortungsgerät eine Mehrzahl von Lichtquellen zur Beleuchtung der das Messgerät durchdringenden Öffnung vorgesehen. Die die Öffnung bildende Hülse ist mittels unterschiedlicher Farben beleuchtbar ausgestaltet. Auf diese Weise ist es möglich, dem Nutzer durch ein optisch kodiertes Signal zu signalisieren, ob er an dem durch die Öffnung definierten Ort hinter der Oberfläche des untersuchten Mediums mit einem eingeschlossenen Gegenstand zu rechnen hat oder nicht. So ist es beispielsweise möglich, über die zwei Farben grün und rot dem Nutzer zu signalisieren, ob an der durch die Öffnung definierten Stelle gebohrt werden kann (beispielsweise grün beleuchtete Hülse) oder aufgrund eines detektierten Gegenstandes nicht gebohrt werden sollte (rot beleuchtete Hülse).

Durch diese unterschiedliche Beleuchtung der das Messgerät durchdringenden Öffnung werden dem Nutzer in einfacher und vorteilhafter Weise gleich zwei Informationen über ein einzelnes Darstellungselement vermittelt. Zum einen definiert die das Messgerät durchdringende Öffnung den momentanen Untersuchungsbereich, zum anderen ermöglicht die in Abhängigkeit des Messsignals unterschiedliche Beleuchtung, die gleichzeitige Übermittlung der zusätzlichen Information, ob an der momentan untersuchten Stelle beispielsweise gebohrt werden kann.

In einer weiteren Ausführungsform des erfindungsgemäßen Ortungsgerätes können Verschlussmittel vorgesehen sein, die es ermöglichen, in Abhängigkeit des Messsignals mindestens eines Sensors die das Gerät durchdringende Öffnung zu verschließen. So kann beispielsweise im Messgerät eine mechanische Klappe vorgesehen sein, die die das Messgerät durchdringende Öffnung verschließt, sobald ein Sensor des Messgerätes ein Messsignal detektiert, welches von einem im Untersuchungsbereich des Ortungsgerätes eingeschlossenen Objekt herrührt. Auf diese Weise wird der Nutzer neben der optischen Anzeige über die beleuchtbare Hülse des Messgerät auch durch den mechanischen Verschluss der Öffnung davon abgehalten, eine Markierung oder Bohrung bei Vorliegen eines eingeschlossenen Objektes vorzunehmen.

Durch die im erfindungsgemäßen Ortungsgerät vorgesehene, das Messgerät durchdringende Öffnung, die in Abhängigkeit des Messsignals beleuchtet wird, kann der Nutzer in vorteilhafter Weise auf den eigentlichen Messbereich, die Position und Form des Sensors und das Vorliegen eines positiven oder negativen Signals in diesem Messbereich aufmerksam gemacht werden.

Weitere Vorteile des erfindungsgemäßen Ortungsgerätes sind in der nachfolgenden Zeichnung sowie in der zugehörigen Beschreibung offenbart.

### Zeichnung

In der Zeichnung ist ein Ausführungsbeispiel des erfindungsgemäßen Ortungsgerätes dargestellt, das in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die hiermit als ebenfalls in diesem Text offenbart anzusehen sind.

Es zeigt:
- Figur 1: eine Ausführungsform des erfindungsgemäßen Messgerätes in einer vereinfachten, perspektivischen Gesamtdarstellung,
- Figur 2: einen perspektivischen Schnitt durch das Messgerät gemäß Figur 1 im Bereich der das Gehäuse durchdringenden Öffnung.

### Beschreibung des Ausführungsbeispiels

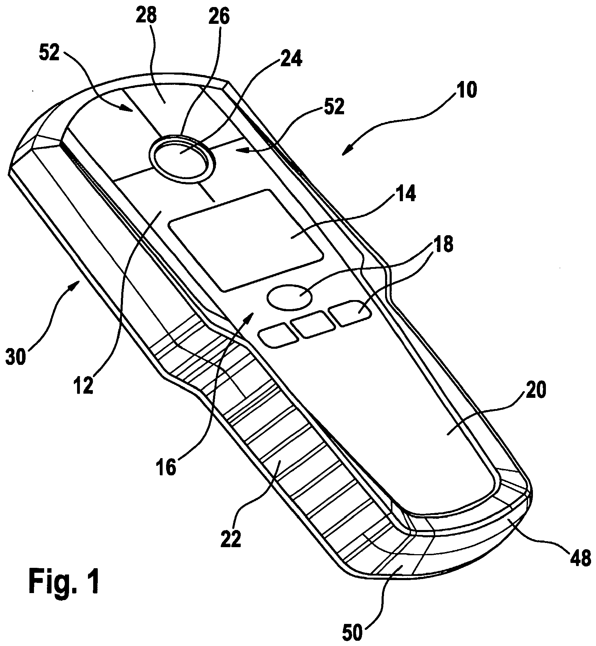

Figur 1 zeigt ein Ausführungsbeispiel des erfindungsgemäßen Ortungsgerätes 10 in einer perspektivischen Übersichtsdarstellung. Das Ortungsgerät besitzt ein Gehäuse 12, das aus einer oberen und einer unteren Halbschale 48 bzw. 50 gebildet ist. Im Inneren des Gehäuses ist zumindest ein Sensor, insbesondere ein induktiver Sensor, mit einer Spulenanordnung zur Metalldetektion, eine Signalerzeugungs- und Auswerteelektronik sowie eine Energieversorgung, beispielsweise über Batterien oder Akkus, vorgesehen ist. Das Gerät besitzt darüber hinaus eine Anzeige 14 zur Ausgabe eines mit dem Messsignal korrelierten Ausgabesignals. Über die Anzeige 14, beispielsweise eine segmentierte Balkenanzeige, oder eine graphische LCD-Anzeige, ist es möglich, die Stärke des detektierten Messsignals darzustellen.

Des Weiteren besitzt das erfindungsgemäße Ortungsgerät ein Bedienfeld 16 mit einer Reihe von Bedienelementen 18, die es beispielsweise ermöglichen, das Gerät ein- bzw. auszuschalten, sowie einen Messvorgang zu starten.

Im Bereich unterhalb des Bedienfeldes 16 weist das Ortungsgerät gemäß Figur 1 einen Bereich 20 auf, der in seiner Form und Materialgestaltung als Handgriff 22 zur Führung des erfindungsgemäßen Ortungsgerätes ausgebildet ist. Mittels dieses Handgriffes wird das Ortungsgerät mit seiner Unterseite 30 über die Oberfläche eines zu untersuchenden Gegenstandes bzw. eines Mediums geführt.

Darüber hinaus kann auch vorgesehen sein, im Bereich des Handgriffs 22 Markierungsmittel, wie beispielsweise einen Bleistift, im oder am Gehäuse 12 des Messgerätes vorzusehen bzw. zu befestigen. Ein solcher Markierstift kann beispielsweise im Bereich des Handgriffs 22 in entsprechende Vorrichtungen des Gehäuses 12 eingeclipst sein oder auch beispielsweise innerhalb des Batteriefaches des Messgerätes aufgehoben sein. Der Anwender kann damit einen Stift bei Verwendung des Gerätes jederzeit mit sich führen, ohne dass ihn dies bei der Arbeit behindert, oder er diesen nach Auffinden eines Objektes erst suchen oder beispielsweise vorab hinters Ohr geklemmt haben muss. Für den praktischen Einsatz auf der Baustelle erscheinen Bleistifte als Markierungsmittel besonders geeignet, anders gestaltete Markierungsmittel, wie beispielsweise eine Anreißnadel, sind jedoch ebenso einsetzbar.

Auf der dem Handgriff 22 entgegengesetzten Seite des Ortungsgerätes 10 weist das Messgerät eine das Gehäuse durchdringende Öffnung 24 auf. Die Öffnung 24 wird gebildet durch eine in das Gehäuse 12 eingesetzte Hülse 26 sowie die Ober- und Unterseite des Gehäuses des Messgerätes.

Im Anwendungsfall wird das erfindungsgemäße Ortungsgerät mit seiner Unterseite 30 entlang der Oberfläche eines zu untersuchenden Mediums geführt. In nachfolgend beschriebener Weise werden dem Nutzer über die Anzeige 14 sowie über die beleuchtbare Hülse 26 Informationen, insbesondere optische Informationen, über das Vorliegen eines in dem untersuchten Medium eingeschlossenen Gegenstandes vermittelt.

Darüber hinaus ist durch die das Gehäuse 12 des Ortungsgerätes durchdringende Öffnung 24 die untersuchte Messstelle für den Nutzer direkt einsehbar, so dass möglicherweise sich auf der Oberfläche der zu untersuchenden Wand befindliche Metallteile, wie beispielsweise Nagelköpfe oder dergleichen leicht visuell erkannt werden können und somit nicht zu unerwünschten, da einer Fehlinterpretation unterliegenden, Messergebnissen führen. Durch Markierungslinien 52, die auf dem Gehäuse 12 des Messgerät ausgebildet sind, wird das Zentrum der Öffnung 24 visualisiert. Die Öffnung muss nicht unbedingt einen runden, insbesondere kreisrunden Querschnitt aufweisen. Ebenfalls möglich wären beispielsweise ovale, rechteckige oder auch quadratische Querschnitte für die Hülse.

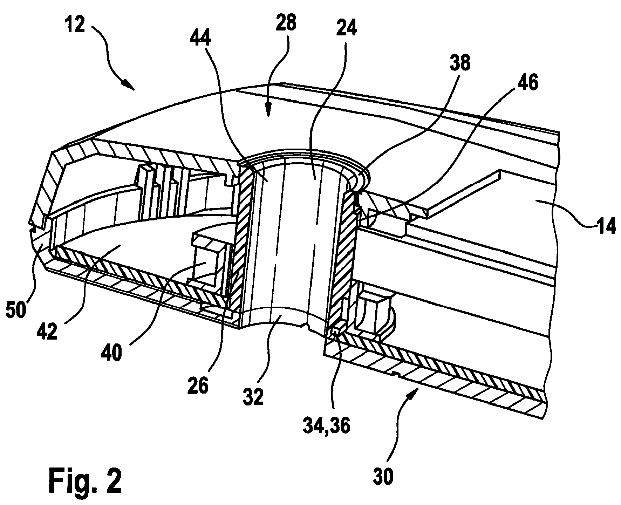

Figur 2 zeigt einen perspektivischen Schnitt durch das erfindungsgemäße Ortungsgerät im Bereich der das Gehäuse durchdringenden Öffnung 24.

Im vorderen, d.h. dem Handgriff 22 abgekehrten Teil des Messgeräts 10 befindet sich eine Sensorspule 40 eines induktiven Metalldetektors. Die Sensorspule und evtl. zugehörige elektronische Komponenten zu ihrer Ansteuerung sind auf einer Leiterplatte 42 fixiert ist. Das Zentrum des Sensors befindet sich somit im Mittelpunkt des Spulenkörpers 40. Um dem Nutzer des Gerätes die Möglichkeit zu geben, den Fundort eines eingeschlossenen Objektes ohne Entfernung des Ortungsgerätes von der untersuchten Oberfläche mit einem Stift seiner Wahl zu markieren, befindet sich im Zentrum der Sensorspule 40 die Gehäuseöffnung 24, durch welche ein Markierungsstift hindurch geführt werden kann. Die Außenwand des Gehäuses 12 wird im Bereich des Spulenmittelpunkts durch die innere Wandung 44 der Hülse 26 gebildet. Die Hülse 26 weist im Ausführungsbeispiel der Figur 2 eine runden Querschnitt auf, um eine gute Anpassung an die Form der sie umgebenden Spulen zu gewährleisten. Prinzipiell sind aber, wie bereits angesprochen, auch andere Querschnittsformen ebenso möglich. Durch eine, auf der Leiterplatte 42 montierte Lichtquellen 34 (z.B. Leuchtdioden) kann diese transparente Hülse 26 abhängig von den Sensordaten beleuchtet oder nicht beleuchtet werden. Die Form der beleuchteten Fläche zeigt dem Anwender dabei gleichzeitig auch die Sensorposition an.

Wie in Figur 2 zu erkennen ist, definiert die Hülse 24, welche in das Gehäuse 12 des Messgerätes eingesetzt ist und sich im Ausführungsbeispiel gemäß Figur 2 auf der Innenseite 30 der unteren Halbschale 50 des Gehäuses 12 an der Gehäusewand 32 abstützt, die das Messgerät durchdringende Öffnung 24. Die Hülse 26 besteht aus einem transparenten Kunststoff, beispielsweise einem Plexiglaselement, in welchem sogenannte Streuzentren integriert sind. Aufgrund dieser Streuzentren besitzt die Hülse 26 ein sehr gutes Streuvermögen bei hervorragender Lichtdurchlässigkeit.

In die Hülse 26 kann mittels einer Lichtquelle 34, die beispielsweise in Form einer Leuchtdiode 36 ausgebildet sein kann, ein Lichtsignal eingekoppelt werden. Aufgrund der hohen Lichtdurchlässigkeit bei gleichzeitig hohem Streuvermögen des Materials der Hülse 26 wird das punktuell in die Hülse eingekoppelte Lichtsignal gleichmäßig in der Hülse verteilt und insbesondere auch zu dem im Bereich der Oberseite 28 des Messgerätes ausgebildeten oberen Rand 38 der Hülse 26 geleitet. Auf diese Weise ist es möglich, den durch die Öffnung 24 gebildeten Kanal durch das Messgerät innen zu beleuchten und insbesondere den die Öffnung definierenden Bereich 38 auf der Oberseite 28 des Messgerätes durch ein Lichtsignal deutlich hervorzuheben.

Im Ausführungsbeispiel der Figur 2 ist die die das Messgerät durchdringende Öffnung definierende Hülse konzentrisch in der Spulenanordnung 40 eines induktiven Sensors des erfindungsgemäßen Ortungsgerätes angeordnet. Andere Querschnitte für die Hülsenform sind aber ebenso möglich. Neben der in Figur 2 gezeigten Spulenanordnung 40 kann das erfindungsgemäße Messgerät weitere Spulenanordnungen sowie auch weitere Sensoren zur Detektion von in einem Medium eingeschlossenen Objekten aufweisen. Auch ist es möglich, lediglich einen oder mehrere kapazitive Sensoren im Messgerät vorzusehen und die Hülse in unmittelbarer Nähe oder innerhalb eines Messkondensators auszubilden. Dazu könnte die Hülse beispielsweise eine oder mehrere Elektroden eines Messkondensators durchdringen.

Die Hülse 26 befindet sich innerhalb der Spulenanordnung 40, um sicherzustellen, dass die Öffnung 24 im Messgerät im Bereich der höchsten Sensitivität des Messgerätes lokalisiert ist. Auf diese Weise ist sichergestellt, dass eine durch die Öffnung 24 auf die Oberfläche eines untersuchten Mediums aufgebrachte Markierung mit der Lage des lokalisierten, eingeschlossenen Objektes möglichst genau übereinstimmt. Die beleuchtbare Hülse dient somit unter anderem auch dazu, dem Nutzer zu verdeutlichen, an welcher Stelle seines Messgerätes sich der Sensor befindet und an welcher Stelle genau gemessen wird.

Darüber hinaus ermöglicht es die beleuchtbare Hülse 26, dem Nutzer anzuzeigen, dass ein eingeschlossenes Objekt lokalisiert worden ist. Wird beispielsweise mittels des induktiven Sensors ein metallischer Gegenstand in dem untersuchten Medium lokalisiert, so können ausgehend von dem detektierten Messsignal eine oder mehrere Lichtquellen 34 angesteuert werden, um die Hülse 26 aufleuchten zu lassen. So ist es beispielsweise möglich, die Hülse im Falle der Detektion eines Objektes aufblinken zu lassen. Beispielsweise wäre es dabei möglich, die Frequenz des Blinksignals mit der Stärke des Messsignals zu korrelieren, um somit die Eingrenzung und das Auffinden der genauen Lage des eingeschlossenen Objektes zu vereinfachen.

Um die Erkennbarkeit des über die Hülse 26 ausgesendeten, optischen Signals zu optimieren, ist es wünschenswert, dass die transparente Hülse 26 im Zentrum des Detektors bei Beleuchtung möglichst homogen erstrahlt. Da der Anwender die Hülse 26 in der Regel aus einem relativ spitzen Winkel betrachtet, ist eine gute und gleichmäßige Ausleuchtung der Hülse insbesondere in ihrem oberen Teil wichtig.

Aus Kostengründen werden in Praxis nur eine geringe Anzahl punktförmiger Lichtquellen 34 auf der Leiterplatte 42 montiert werden. Flächige Lichtemitter, welche von sich aus eine gleichmäßige Ausleuchtung der Hülse ermöglichen würden, sind technisch schwerer zu realisieren und kostenintensiver, stellen jedoch auch eine mögliche Realisierung für die Lichtquelle 24 dar. Das Problem der gleichmäßigen Ausleuchtung kann dadurch gelöst werden, dass die transparente Hülse 24 aus einem Kunststoffmaterial gefertigt wird, welches optische Streuzentren enthält. Die Hülse wird vorteilhafterweise gewissermaßen aus "Milchglas" gefertigt.

Eine homogenere Beleuchtung der Hülse 26 kann auch dadurch realisiert werden, dass die sichtbare Innenfläche 44 der transparenten Gehäusehülse 26 mit einer geeigneten, rauhen und damit lichtstreuenden Oberflächenstruktur versehen wird. Dies kann bei Ausführung der Hülse als Kunststoff-Spritzgussteil dadurch erfolgen, dass die zugehörigen Werkzeugoberflächen geeignet erodiert werden. Für die dem Gehäuseinneren zugewandten Flächen 46 der Hülse 26 ist es demgegenüber vorteilhafter, wenn sie glatt ausgeführt werden, die gilt ggfls. ebenso für den für den Nutzer schlecht sichtbaren unteren Teil der Außenfläche der Gehäusehülse. Das von den Beleuchtungsquellen 34 ausgehende Licht wird an glatten Oberflächen zu einem großen Teil reflektiert und wie in einem optischen Lichtleiter in Richtung der sichtbaren oberen Außenseite 38 der Hülse 26 geführt. Diese Funktion kann noch verbessert werden, wenn diese glatten Gehäuseflächen durch eine geeignete Beschichtung verspiegelt werden.

Gemäß der Erfindung sind mehrere Lichtquellen vorgesehen, die es auch ermöglichen, Licht unterschiedlicher Farbe in die Hülse 26 einzukoppeln, um so dem Nutzer über ein farblich kodiertes Signal Informationen über das Vorliegen eines georteten Gegenstandes zu geben. So kann beispielsweise über eine grün beleuchtete Hülse dem Nutzer mitgeteilt werden, dass er in dem durch die Öffnung 24 definierten Gebiet auf der untersuchten Oberfläche gefahrlos beispielsweise bis zu einer in der Anzeige angegebenen Bohrtiefe bohren kann.

Auch ist es möglich, durch die unterschiedliche Beleuchtung der Einsatzhülse 26 dem Nutzer anzuzeigen, ob ein eingeschlossener Gegenstand detektiert wurde (die Leuchthülse ist beispielsweise rot beleuchtet) oder ob keinerlei Messsignal vorliegt, sodass ein gefahrloses Bohren möglich ist (die Leuchthülse ist in diesem Fall beispielsweise grün beleuchtet).

Möglich wäre es alternativer Weise auch, die Intensität des in die Hülse 26 eingekoppelten Lichtes mit dem Detektionssignal zu korrelieren, um dem Nutzer die zusätzliche Information über einen Signalverlauf, d. h. die Richtung eines ansteigenden Messsignals, zu vermitteln.

In einer besonders vorteilhaften Ausführung ist der transparenten Hülse 26 des Messgerätes zusätzlich zur Anzeigefunktion auch eine mechanische Aufgabe zugewiesen. So ist es möglich, dass durch die Hülse 26 die Position der Leiterplatte 42 innerhalb des Gehäuseunterteils fixiert wird. Dies ist insbesondere für Metalldetektoren attraktiv, da so im Bereich der Sensorspule 40 auf eine Fixierung durch eine metallische Schraube verzichtet werden kann. Eine solche Schraube kann potentiell die Messleistung des Metallsensors beeinflussen.

Das erfindungsgemäße Ortungsgerät ist nicht auf das in den Figuren dargestellte Ausführungsbeispiel beschränkt.

So kann in einer speziellen Ausführungsform des erfindungsgemäßen Ortungsgerätes ein Verschlussmechanismus vorgesehen sein, der es in Abhängigkeit des Messsignals eines Sensors ermöglicht, die das Gerät durchdringende Öffnung 24 automatisch zu verschließen. In dieser Ausführungsform könnte beispielsweise ein detektiertes, hinter der untersuchten Oberfläche eingeschlossenes Objekt über ein entsprechendes Leuchtsignal der Hülse 26 dem Nutzer mitgeteilt werden, wobei gleichzeitig die Öffnung 24 beispielsweise durch einen mechanischen Klappenmechanismus verschlossen wird, um beispielsweise eine Bohrung im Bereich des lokalisierten Gegenstandes zu verhindern.

Das erfindungsgemäße Ortungsgerät ist nicht auf die Verwendung eines induktiven Sensors, und insbesondere die Verwendung lediglich einer Spulenanordnung, beschränkt. In vorteilhafter Weise kann vorgesehen sein, weitere beispielsweise kapazitive Sensoren im Gehäuse des Ortungsgerätes anzuordnen. Um eine möglichst genaue Lokalisierung eines in einem Medium eingeschlossenen Objektes mit Hilfe des erfindungsgemäßen Ortungsgerätes vornehmen zu können, sollte die das Ortungsgerät durchdringende Öffnung 24 im Wirkzentrum der Sensoren angeordnet sein.

Das erfindungsgemäße Messgerät kann auch als ein kapazitives Messgerät ausgebildet sein.

## Patentansprüche

1. Handgehaltenes Ortungsgerät (10) zur Detektion von in einem Medium eingeschlossenen Objekten, mit einem Gehäuse (12) und mindestens einer im Gehäuse (12) angeordneten Sensorvorrichtung, sowie mit einer das Gehäuse (12) des Ortungsgeräts (10) durchdringenden Öffnung (24), wobei die Öffnung (24) des Ortungsgeräts (10) mittels mehrerer im Ortungsgerät angeordneter Lichtquellen (34, 36) beleuchtbar ist, **dadurch gekennzeichnet, dass** ein farblich kodiertes Lichtsignal zur Beleuchtung der Öffnung (24) des Ortungsgeräts (10) vorgesehen ist, wobei die Öffnung (24) mit mindestens zwei sich unterscheidenden Farben in Abhängigkeit eines Messsignals mindestens eines Sensors der Sensorvorrichtung beleuchtbar ist, um derart einem Nutzer zu signalisieren, ob an dem durch die Öffnung (24) definierten Ort mit einem eingeschlossenen Objekt zu rechnen ist oder nicht.

2. Handgehaltenes Ortungsgerät nach Anspruch 1, **dadurch gekennzeichnet, dass** die Sensorvorrichtung mindestens einen induktiven Sensor zur Ortung aufweist.

3. Handgehaltenes Ortungsgerät nach Anspruch 2, **dadurch gekennzeichnet, dass** die Öffnung (24) konzentrisch zu einer im Ortungsgerät angeordneten Spule (40) des induktiven Sensors verläuft.

4. Handgehaltenes Ortungsgerät nach Anspruch 1 oder 2, **dadurch gekennzeichnet, dass** die Sensorvorrichtung mindestens einen kapazitiven Sensor aufweist.

5. Handgehaltenes Ortungsgerät nach Anspruch 1, **dadurch gekennzeichnet, dass** die Öffnung (24) durch eine Hülse (26) gebildet ist, wobei die Hülse (26) mittels mindestens einer im Ortungsgerät angeordneten Lichtquelle (34, 36) beleuchtbar ist.

6. Handgehaltenes Ortungsgerät nach Anspruch 5, **dadurch gekennzeichnet, dass** die Hülse (26) im Wesentlichen aus einem zumindest teilweise transparenten Kunststoff besteht.

7. Handgehaltenes Ortungsgerät nach Anspruch 5 oder 6, **dadurch gekennzeichnet, dass** die Hülse diffus lichtstreuend ausgebildet ist.

8. Handgehaltenes Ortungsgerät nach einem der vorhergehenden Ansprüche, **dadurch gekennzeichnet, dass** die mehreren Lichtquellen (34,36) Leuchtdioden sind.

9. Handgehaltenes Ortungsgerät nach Anspruch 1, **dadurch gekennzeichnet, dass** Verschlussmittel vorgesehen sind, die es ermöglichen, in Abhängigkeit eines Messsignals mindestens eines Sensors, die das Gehäuse (12) des Ortungsgeräts (10) durchdringende Öffnung (24) zu verschließen.

## Claims

1. Handheld locating device (10) for detecting objects enclosed in a medium, having a housing (12) and at least one sensor apparatus arranged in the housing (12), and having an opening (24) extending through the housing (12) of the locating device (10), wherein the opening (24) of the locating device (10) is able to be illuminated by means of a plurality of light sources (34, 36) arranged in the locating device, **characterized in that** a colour-coded light signal for illuminating the opening (24) of the locating device (10) is provided, wherein the opening (24) is able to be illuminated with at least two different colours in dependence on a measurement signal of at least one sensor of the sensor apparatus to signal in this way to a user whether or not an enclosed object should be expected at the location defined by the opening (24).

2. Handheld locating device according to Claim 1, **characterized in that** the sensor apparatus has at least one inductive sensor for locating purposes.

3. Handheld locating device according to Claim 2, **characterized in that** the opening (24) extends concentrically with respect to a coil (40) of the inductive sensor that is arranged in the locating device.

4. Handheld locating device according to Claim 1 or 2, **characterized in that** the sensor apparatus has at least one capacitive sensor.

5. Handheld locating device according to Claim 1, **characterized in that** the opening (24) is formed by a sleeve (26), wherein the sleeve (26) is able to be illuminated by means of at least one light source (34, 36) arranged in the locating device.

6. Handheld locating device according to Claim 5, **characterized in that** the sleeve (26) substantially consists of an at least partially transparent plastic.

7. Handheld locating device according to Claim 5 or 6, **characterized in that** the sleeve is embodied to diffusely scatter light.

8. Handheld locating device according to one of the preceding claims, **characterized in that** the plurality of light sources (34, 36) are light-emitting diodes.

9. Handheld locating device according to Claim 1, **characterized in that** closure means are provided, which allow the opening (24) extending through the housing (12) of the locating device (10) to be closed in dependence on a measurement signal of at least one sensor.

## Revendications

1. Appareil de localisation (10) portatif destiné à la détection d'objets incorporés dans un milieu, comprenant un boîtier (12) et au moins un dispositif capteur disposé dans le boîtier (12), ainsi qu'une ouverture (24) qui traverse le boîtier (12) de l'appareil de localisation (10), l'ouverture (24) de l'appareil de localisation (10) pouvant être éclairée au moyen de plusieurs sources de lumière (34, 36) disposées dans l'appareil de localisation, **caractérisé en ce qu'**un signal lumineux avec codage couleur est prévu pour l'éclairage de l'ouverture (24) de l'appareil de localisation (10), l'ouverture (24) pouvant être éclairée avec au moins deux couleurs qui se différencient en fonction d'un signal de mesure d'au moins un capteur du dispositif capteur afin de signaler ainsi à un utilisateur si un objet incorporé est susceptible ou non de se trouver à l'endroit défini par l'ouverture (24).

2. Appareil de localisation portatif selon la revendication 1, **caractérisé en ce que** le dispositif capteur possède au moins un capteur inductif servant à la localisation.

3. Appareil de localisation portatif selon la revendication 2, **caractérisé en ce que** l'ouverture (24) suit un tracé concentrique par rapport à une bobine (40) du capteur inductif qui est disposée dans l'appareil de localisation.

4. Appareil de localisation portatif selon la revendication 1 ou 2, **caractérisé en ce que** le dispositif capteur possède au moins un capteur capacitif.

5. Appareil de localisation portatif selon la revendication 1, **caractérisé en ce que** l'ouverture (24) est formée par une douille (26), la douille (26) pouvant être éclairée au moyen d'au moins une source de lumière (34, 36) disposée dans l'appareil de localisation.

6. Appareil de localisation portatif selon la revendication 5, **caractérisé en ce que** la douille (26) se compose sensiblement d'une matière plastique au moins partiellement transparente.

7. Appareil de localisation portatif selon la revendication 5 ou 6, **caractérisé en ce que** la douille est configurée pour une dispersion diffuse de la lumière.

8. Appareil de localisation portatif selon l'une des revendications précédentes, **caractérisé en ce que** les plusieurs sources de lumière (34, 36) sont des diodes électroluminescentes.

9. Appareil de localisation portatif selon la revendication 1, **caractérisé en ce que** des moyens de fermeture sont présents, lesquels permettent de fermer l'ouverture (24) qui traverse le boîtier (12) de l'appareil de localisation (10) en fonction d'un signal de mesure d'au moins un capteur.
